# EUROPÄISCHE PATENTSCHRIFT

(11) **EP 2 174 158 B1**
(45) Veröffentlichungstag und Bekanntmachung des Hinweises auf die Patenterteilung: **26.01.2011**
(21) Anmeldenummer: 08786084.7
(22) Anmeldetag: 11.07.2008
(51) Int. Cl.: G01S 7/03

(54) **RADARVORRICHTUNG**
RADAR APPARATUS
DISPOSITIF RADAR

(30) Priorität: 24.07.2007 DE 102007034329
(43) Veröffentlichungstag der Anmeldung: 14.04.2010
(73) Patentinhaber: Robert Bosch GmbH, 70442 Stuttgart (DE)
(72) Erfinder: SEIDEL, Juergen, 73728 Esslingen (DE); HASCH, Juergen, 70195 Stuttgart (DE); SCHMIDT, Ewald, 71634 Ludwigsburg (DE)
(86) Internationale Anmeldenummer: PCT/EP2008/059087
(87) Internationale Veröffentlichungsnummer: WO 2009/013152

(56) Entgegenhaltungen:
- EP-A- 1 357 395
- EP-A- 1 677 126
- DE-A1- 19 710 811
- US-A- 5 481 268
- US-A1- 2005 285 773
- US-A1- 2006 085 160
- US-B1- 6 501 417

## Beschreibung

Die Erfindung betrifft eine Radarvorrichtung nach Anspruch 1.

### Stand der Technik

Radarvorrichtungen, insbesondere zur Messung der Geschwindigkeit über Grund, beispielsweise eines Kraftfahrzeuges, sind bekannt. Sie werden beispielsweise verwendet, um Fahrassistenzsysteme und/oder Sicherheitssysteme in Kraftfahrzeugen mit Informationen über das Bewegungsverhalten des Kraftfahrzeuges zu versorgen; insbesondere sollen Fahrdynamik-Regelungssysteme mit den zu ihrer Betriebsführung erforderlichen Daten über ein eventuelles Untersteuern oder Übersteuern eines Fahrzeuges versorgt werden. Hierzu ist eine möglichst genaue Erfassung der Geschwindigkeit, der Fortbewegungsrichtung und des Winkels zwischen der Fortbewegungsrichtung und der Längsachse des Fahrzeugs, also des sogenannten Schwimmwinkels, notwendig.

Die DE 10 2005 021 226 A1 schlägt hierzu eine Vorrichtung zur berührungslosen Geschwindigkeitsmessung eines Fahrzeugs mit einer bifokalen, gefalteten Antenneneinrichtung an einem Fahrzeug vor, die zum Emittieren von emittierten Signalwellen in mindestens zwei unterschiedlichen Richtungen und zum Empfangen von den emittierten Signalwellen entsprechenden reflektierten Signalwellen aus den mindestens zwei unterschiedlichen Richtungen eingerichtet ist, sowie eine hierauf gerichtete Signalverarbeitungseinrichtung zum Generieren von mindestens einem Signal als Maß für eine Geschwindigkeit in mindestens eine der unterschiedlichen Richtungen, basierend auf den emittierten Signalwellen und den entsprechend reflektierten Signalwellen. Hieran ist nachteilig, dass eine bifokale, gefaltete Antenneneinrichtung zur Anwendung kommt, die eine große Bauform aufweist, wobei die zur Generierung, zum Emittieren und zum Empfangen der entsprechenden Signalwellen erforderlichen weiteren Einrichtungen als separate Bauteile vorliegen, die beispielsweise über Hohlwellenleiter mit der bifokalen, gefalteten Antenneneinrichtung verbunden werden, oder wobei für jede Richtung ein Hochfrequenzchip im Bereich der bifokalen, gefalteten Antenneneinrichtung angeordnet werden muss. Neben der relativ großen Bauform ist weiter nachteilig, dass derartige Konstruktionen nicht für eine kostengünstige Großserienfertigung geeignet sind. Bifokale, gefaltete Antenneneinrichtungen benötigen große Hochfrequenz-Substratflächen, wobei in den im Stand der Technik bekannten Aufbaukonzepten die Abführung der entstehenden Verlustleistung keine Berücksichtigung findet.

Die DE 197 10 811 A1 beschreibt eine Vorrichtung zum gerichteten Abstrahlen und/oder Aufnehmen elektromagnetischer Wellen. Diese besteht aus mindestens einem Antennenelement und einer dielektrischen Linse, wobei zwischen diesen beiden zur Vermeidung von Überstrahlungen der Linse ein vorfokussierender, dielektrischer Körper angeordnet ist. Dieser ist zur Vereinfachung einer exakten Justage flächig ausgedehnt und bildet in Verbindung mit einer Grundplatte eine hermetisch dichte Kapselung für verpackungslose ICs. Weiterhin betrifft die US 5,481,268 ein Dopplerradarsystem für Kraftfahrzeuge, während in der US 2006/0085160 A1 eine Hochfrequenzsignalsteuerungseinrichtung und eine Sensorvorrichtung beschrieben sind. Die US 2005/0285773 A1 zeigt letztlich ein vorwärtsgerichtetes Radarsystem.

### Offenbarung der Erfindung

Aufgabe der Erfindung ist es, eine Radarvorrichtung bereitzustellen, die die genannten Nachteile vermeidet, und die insbesondere einen serientauglichen Aufbau zur kostengünstigen Fertigung aufweist.

Hierzu wird eine Radarvorrichtung, insbesondere zur Messung einer Geschwindigkeit über Grund, mit einer Hochfrequenzschaltung und einer Antenne vorgeschlagen, wobei die Hochfrequenzschaltung als Hochfrequenzchip ausgebildet ist, der mehrere Antennenausgänge aufweist, die über Antennenleitungen an Hornantennen angeschlossen sind, und wobei der Hochfrequenzchip zwischen einer Leiterplatte und einem Träger angeordnet ist. Dabei soll der Träger Teile der Hornantenne ausbilden. Die Hochfrequenzschaltung ist als Hochfrequenzchip ausgeführt, also in einer integrierten Bauform, so dass zum Emittieren, Empfangen und Auswerten von Signalwellen nur noch sehr wenige Bauteile benötigt werden. Dieser Hochfrequenzchip weist mehrere Antennenausgänge auf, die über Antennenleitungen an Hornantennen angeschlossen sind. Hornantennen sind hierbei Antennen, die eine im Wesentlichen hornförmige Kontur aufweisen. Die aus dem Stand der Technik bekannte, bifokale, gefaltete Antenneneinrichtung ist hierbei nicht erforderlich.

Der Hochfrequenzchip soll zwischen der Leiterplatte und einem Träger angeordnet sein. Der Hochfrequenzchip befindet sich auf der einen Seite der Leiterplatte, dergestalt, dass er die Leiterplatte um seine Bauhöhe beziehungsweise den für ihn erforderlichen Bauraum überragt. An den Hochfrequenzchip anschließend folgt ein Träger, der als Tragvorrichtung für die Radarvorrichtung dient, insbesondere die vorstehend beschriebenen Bauteile in einer solchen Art und Weise aufnimmt, dass sie in der gewünschten Anordnung fixiert sind. Die Leiterplatte wird demzufolge mit ihrer den Chip tragenden Oberseite von dem Träger aufgenommen.

Weiterhin bildet der Träger Teile der Hornantennen aus. Die über den jeweiligen Leiterplattenabstrahlfeldern anzuordnenden Hornantennen werden folglich durch eine geometrische Struktur, beispielsweise hornkonturartige/kegelförmige Ausnehmungen im Träger gebildet, die sich, von der Leiterplatte ausgehend, nach oben zur anderen Seite des Trägers hin erweitern. An der Oberseite des Trägers, also der Seite, die der Leiterplatte abgewandt ist, ist die Öffnung der Hornstruktur im Träger am größten, so dass dort ein Hornmund ausgebildet ist, wohingegen sie auf der der Leiterplatte zugewandten Unterseite des Trägers am kleinsten ist. Diese Unterseite des Trägers nimmt ferner den vorstehend beschriebenen Raum zur Aufnahme des Hochfrequenzchips und zu dessen Verklebung am Träger auf. Durch diese Ausführung erfüllt der Träger nicht nur die Funktion der Wärmesenke und Wärmeableitung für den Hochfrequenzchip, sondern bildet gleichzeitig auf vergleichsweise sehr kleinem Bauraum die Hornantennen zum Betrieb der Radarvorrichtung aus.

In einer Ausführungsform der Erfindung sind die Antennenleitungen jeweils als mindestens eine auf einer Leiterplatte verlaufende Leiterbahn ausgebildet. Die Antennenleitungen sind demzufolge derart ausgeführt, dass sie Leiterbahnen auf einer Leiterplatte bilden, wodurch Verdrahtungen oder Hohlleiter nicht erforderlich sind.

In einer weiteren Ausführungsform weisen die Antennenleitungen endseitig jeweils ein Leiterplattenabstrahlfeld (Patch) auf. Das Leiterplattenabstrahlfeld dient dazu, die Signalwellen abzustrahlen, wozu jedem Leiterplattenabstrahlfeld eine der Hornantennen zugeordnet ist. Insbesondere ist hierbei vorgesehen, dass die Hornantennen über dem Leiterplattenabstrahlfeld angeordnet sind und dieses in die Hornantennen einstrahlt.

In einer weiteren Ausführungsform ist die Leiterplatte eine Polyimid-Folie. Als solche Polyimid-Folie wird beispielsweise Kapton verwendet; sie dient zugleich als Leiterplatte und als hochfrequenz-taugliches Trägersubstrat für die Antennenspeisung. Solche Leiterplatten sind, insbesondere auch in Hinblick auf die als Leiterbahnen ausgeführten Antennenleitungen, kostengünstig und mit bekannten Verfahren einfach zu fertigen.

In einer bevorzugten Ausführungsform ist die Antennenleitung ein Mikrostreifen (Micro-Strip), ein geerdeter, koplanarer Streifen (Grounded-Coplanar Strip) oder eine symmetrische Leitung. Je nach Einsatzzweck und nach bevorzugtem Frequenzbereich werden die Antennenleitungen folglich als Mikrostreifen ausgeführt, also dergestalt, dass auf einer Seite der Leiterplatte eine einzelne Leiterbahn zu dem Leiterplattenabstrahlfeld führt, und auf der gegenüberliegenden Seite der Leiterplatte ein entsprechend große Massefeld angeordnet ist. Als weitere Ausführungsform kommt ein geerdeter, koplanarer Streifen in Betracht, wobei um die vorbeschriebene Ausführungsform als Mikrostreifen beidseitig jeweils noch eine masseführende Leiterbahn zur weiteren Abschirmung angeordnet ist. Weiter kommt eine symmetrische Leitung in Betracht, wie sie aus der allgemeinen Signaltechnik bekant ist.

In einer bevorzugten Ausführungsform sind vier Antennenausgänge vorgesehen, an die vier Antennenleitungen angeschlossen sind, die derart verlaufen, dass sie eine Kreuzstruktur bilden, bei der eine jeweilige Antennenleitung zu einer jeweils benachbarten Antennenleitung einen Winkel von 90° einschließt. Die Antennenleitungen bilden untereinander auf der Leiterplatte folglich ein Kreuz aus, wobei im Zentrum der Kreuzstruktur der Hochfrequenzchip angeordnet ist, und an den jeweiligen Enden der Antennenleitungen das jeweilige Leiterplattenabstrahlfeld. Auf diese Weise werden vier Abstrahl- und Empfangseinrichtungen in Verbindung mit den jeweiligen Antennen ausgebildet, die eine entsprechend den jeweiligen Anforderungen gerichtete Abstrahlung und einen entsprechenden Empfang der Signalwellen zulassen. Gleichzeitig wird eine relativ kleine, einfach zu fertigende Bauform realisiert.

In einer weiteren bevorzugten Ausführungsform sind vier Hornantennen vorgesehen, die im Bereich der Ecken eines gedachten Quadrats angeordnet sind. Die Ecken des gedachten Quadrats entsprechen hierbei der Anordnung der Leiterplattenabstrahlfelder in der vorstehend beschriebenen Kreuzstruktur der vier Antennenleitungen. Das gedachte Quadrat ist demzufolge gegenüber der Kreuzstruktur um 45° dergestalt verschoben, dass die Hornantennen jeweils, beispielsweise mit ihrem jeweiligen Brennpunkt, über dem jeweils zugeordneten Leiterplattenabstrahlfeld (Patch) angeordnet sind. Auf diese Weise erfolgt die Abstrahlung der Signalwellen des Leiterplattenabstrahlfelds in die jeweils zugeordneten Hornantenne hinein, wobei durch die Geometrie und Ausrichtung der Hornantenne innerhalb der vorbeschriebenen geometrischen Struktur eine entsprechende Richtungswirkung erzielt wird.

In einer bevorzugten Ausführungsform bildet der Träger eine Wärmesenke für den Hochfrequenzchip. Der Träger wird hierzu thermisch an den Hochfrequenzchip gekoppelt, beispielsweise über Wärmeleitkleber mit diesem verklebt. Der Träger ist weiter als metallischer Träger ausgeführt, beispielsweise als ein im Metal-Injection-Molding-Verfahren hergestelltes Bauteil aus einer Magnesium- oder Aluminium-Legierung oder aus einer Legierung, die derartige Metalle aufweist. Der Träger weist zur entsprechenden Aufnahme des Hochfrequenzchips eine hierfür geeignete Struktur, beispielsweise eine der Bauhöhe des Hochfrequenzchips entsprechende, bevorzugt auch formangepasste Trage-Ausnehmung auf, in die der Hochfrequenzchip eingeklebt werden kann, insbesondere bei Montage des Trägers im Bereich der bestückten Leiterplatte. Hierdurch ergibt sich eine optimale Entwärmung des Hochfrequenzchips, da die Metallmasse am Chip groß ist und ein sehr kleiner Wärmewiderstand zwischen Hochfrequenzchip und Wärmesenke vorliegt. In der beschriebenen Ausführung wird nur ein minimaler Klebespalt zwischen Hochfrequenzchip und Träger benötigt, der mit Wärmeleitkleber gebrückt wird.

In einer weiteren, besonders bevorzugten Ausführungsform weist der Träger eine Kühlrippenstruktur auf. Damit ist gemeint, dass der Träger insbesondere außenseitig/stirnseitig Kühlrippen aufweist, wie sie aus dem Stand der Technik geläufig sind, so dass eine starke Vergrößerung der wärmeabstrahlenden Oberfläche im Bereich dieser Stirnseiten erreicht wird. Bevorzugt ist der Träger aus dem vorstehend beschriebenen, eine besonders gute Wärmeleitung gewährleistenden Material gefertigt. Die Verlustwärme des Hochfrequenzchips wird damit über den Träger an die Umgebungsluft abgegeben.

In einer weiteren Ausführungsform ist dem Träger ein Deckel zugeordnet, der Hornlinsen für die Hornantennen aufweist und/oder die Hornantennen dielektrisch ausfüllt. Der Deckel wird an der Oberseite des Trägers angeordnet, dergestalt, dass er den Träger abdeckt. Hierbei kann der Deckel Hornlinsen aufweisen, also Einrichtungen zur Bündelung oder Streuung der Signalwellen, die aus den Hornantennen austreten, und/oder die Hornantennen dielektrisch ausfüllen, also mit einem dielektrisch wirkenden Material, aus dem vorzugsweise der Deckel gefertigt ist, die Hornantennen mindestens teilweise ausfüllen. Beispielsweise ist hier vorgesehen, dass an der Deckelunterseite, also an der Seite, die den entsprechenden Hornlinsen gegenüberliegt, eine den im Träger ausgebildeten Hornantennen formangepasste Struktur ausgebildet ist, die in die am Träger ausgebildeten Hornantennen hineinragt und diese ausfüllt. Auf diese Weise lässt sich noch einmal eine Verkleinerung der Bauform relativ zu den für die verwendeten Frequenzbereiche im Stand der Technik bekannten und üblichen Antennenabmessungen erreichen. Die Hornlinsen dienen hierbei der Bündelung beziehungsweise Richtung der Signalwellen, so dass diese in die für die jeweilige Anwendungszwecke gewünschte und erforderliche Richtung abgestrahlt werden und hierbei gebündelt werden können.

In einer weiteren, besonders bevorzugten Ausführungsform ist vorgesehen, dass auf der dem Hochfrequenzchip abgewandten Seite der Leiterplatte ein Hochfrequenz-Fixierteil angeordnet ist, das Bereiche der Hornantennen ausbildet. Auf der dem Hochfrequenzchip abgewandten Seite der Leiterplatte, also der Leiterplattenunterseite, ist ein Fixierteil angeordnet, das einerseits die Leiterplatte zwischen ihm selbst und dem Träger mechanisch fixiert, wozu das Hochfrequenz-Fixierteil beispielsweise mit dem Träger durch die Leiterplatte hindurch verschraubt oder auch verklebt werden kann (im ersteren Falle weist die Leiterplatte vorzugsweise Ausnehmungen auf, die von der Verschraubung oder von Fixierbolzen durchdrungen werden können). Andererseits dient das Hochfrequenz-Fixierteil zur Ausbildung von Bereichen der Hornantennen, dergestalt, dass sich die Struktur der Hornantenne, wie sie im Träger angelegt ist, im Bereich des Hochfrequenz-Fixierteils fortsetzt. In einer Schnittdarstellung sähe es folglich so aus, als ob die Leiterplatte von der geometrischen Struktur der Hornantenne durchdrungen wäre. Im Hochfrequenz-Fixierteil wird bevorzugt ein Shortback ausgebildet, also ein Hochfrequenz-Kurzschlussbereich, der genau unterhalb des Leiterplattenabstrahlfeldes der jeweiligen Hornantenne liegt. Die gesamte Antenne wird demzufolge gebildet aus dem auf der Leiterplatte befindlichen Leiterplattenabstrahlfeld, dem unter dem Leiterplattenabstrahlfeld im Hochfrequenz-Fixierteil angeordneten Shortback und der oberhalb des Leiterplattenabstrahlfelds im Träger befindlichen Hornstruktur der Hornantenne.

In einer weiteren, ganz besonders bevorzugten Ausführungsform ist der Hochfrequenzchip in Flip-Chip-Montage angeschlossen. Hierdurch lässt sich eine ganz besonders vorteilhafte, kleine Bauform des Hochfrequenzchips auf der Leiterplatte ausbilden, dadurch, dass alle oder fast alle benötigten Hochfrequenzschaltungen auf dem Hochfrequenzchip integriert sind und dieser beispielsweise als Silizium-Germanium-Chip ausgebildet ist. Der Hochfrequenzchip ist als offener, nicht eingehauster Flip-Chip ausgeführt, so dass er in der Flip-Chip-Montage angeschlossen werden kann, also durch Löt-Bumps direkt auf der Leiterplatte verlötet und mit seiner Rückseite sodann in der Montage mit Wärmeleitkleber mit dem Träger verklebt. Bevorzugt wird hierbei in einem dem Hochfrequenzchip gegenüberliegenden Bereich des Hochfrequenz-Fixierteils eine Ausnehmung vorgesehen, so dass mögliche Geometrietoleranzen der Bumps durch die Flexibilität der Leiterplatte, die bevorzugt eine Polyimid-Folie, beispielsweise Kapton, ist, ausgeglichen werden können, da diese sich in die Ausnehmung hinein geringfügig dehnen kann. Auf diese Weise wird eine völlig unkritische Montage und Verklebung des Hochfrequenzchips an dem Träger ermöglicht. Insbesondere können hierdurch auch Geometrietoleranzen hinsichtlich des Klebespalts zwischen Träger und Hochfrequenzchip ausgeglichen werden, da die Leiterplatte in dem geringen Umfang, in dem solche Toleranzen bei einer Großserienfertigung vorkommen, nachgeben kann. Entsprechende Auflagedifferenzen werden durch eine Verformung der Leiterplatte bei der Montage des Hochfrequenz-Fixierteils überbrückt, wozu das Hochfrequenz-Fixierteil die entsprechende Ausnehmung in Gegenüberlage des Hochfrequenzchips aufweist.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand eines Ausführungsbeispiels und von Figuren näher erläutert.

Es zeigen
- Figur 1: eine Explosionsdarstellung der Radarvorrichtung,
- Figur 2: eine Schnittdarstellung durch die Radarvorrichtung und
- Figur 3: eine Aufsicht auf die Leiterplatte mit montiertem Hochfrequenzchip und mit Mikrostrip-Antennenleitungen.

### Ausführungsform(en) der Erfindung

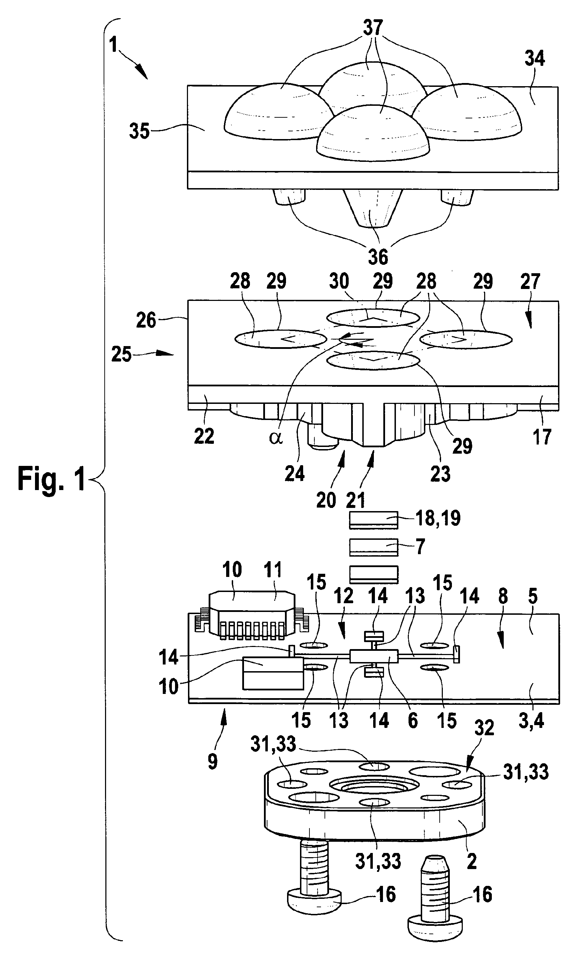

Figur 1 zeigt eine Radarvorrichtung 1 in einer Explosionsdarstellung. Die Radarvorrichtung 1 weist ein Hochfrequenz-Fixierteil 2 auf, das unterseitig einer Leiterplatte 3 angeordnet ist und die Leiterplatte 3 an deren Leiterplattenunterseite 9 abstützt. Die Leiterplatte 3, die als Polyimid-Folie 4, nämlich aus Kapton 5, ausgebildet ist, weist auf ihrer Leiterplattenoberseite 8 einen Aufnahmebereich 6 für einen Hochfrequenzchip 7 auf, wobei der Aufnahmebereich 6 im Wesentlichen zentrisch auf der Leiterplattenoberseite 8 angeordnet ist. Die Leiterplatte 3 trägt auf der Leiterplattenoberseite 8 und gegebenenfalls auch auf der Leiterplattenunterseite 9 weitere Bauelemente 10, wie sie zur Ausführung der elektrischen Schaltung der Radarvorrichtung 1 erforderlich sind, insbesondere auch zum Zwecke der Kontaktierung beispielsweise durch eine Kontaktierungsvorrichtung 11, mit der die Radarvorrichtung mit außerhalb ihrer selbst liegenden elektrischen oder elektronischen Schaltungen verbunden werden und insbesondere mit Betriebsspannung versorgt werden kann. Von dem im Wesentlichen zentrisch angeordneten Aufnahmebereich 6 auf der Leiterplattenoberseite 8 gehen, in Ausbildung einer Kreuzstruktur 12, Antennenleitungen 13 ab, die endseitig, innerhalb der Leiterplattenoberseite 8 gelegen, jeweils ein Leiterplattenabstrahlfeld 14 aufweisen. Die Antennenleitungen 13 schließen untereinander jeweils einen Winkel von 90° in der Ebene der Leiterplattenoberseite 8 ein, wodurch sie die genannte Kreuzstruktur 12 ausbilden. In etwa im Bereich ihrer jeweiligen Winkelhalbierenden, also im 45°-Winkel zwischen jeweils zwei Antennenleitungen 13, befinden sich Montageausnehmungen 15 in der Leiterplatte 3, die von Schraubbolzen 16 durchdrungen werden können, um das Hochfrequenz-Fixierteil 2 mit einem oberhalb der Leiterplatte 3 angeordneten Träger 17 verschrauben zu können, wobei die Leiterplatte 3 zwischen dem Hochfrequenz-Fixierteil 2 und dem Träger 17 angeordnet ist. Hierbei wird der Hochfrequenzchip 7 mittels einer Klebschicht 18, nämlich Wärmeleitkleber 19, mit einer ihm in seiner Bauhöhe angepassten, beispielsweise formangepassten, Trageausnehmung 20 an einer Trägerunterseite 21 des Trägers 17 verklebt. Diese Verklebung findet erst im Zuge der Endmontage der Radarvorrichtung 1 statt, nachdem der Hochfrequenzchip 7 im Wege der Flip-Chip-Montage mit dem Aufnahmebereich 6 durch hier nicht dargestellte Löt-Bumps verlötet ist. Der Träger 17, der bevorzugt aus einer Magnesium-Aluminium-Legierung 22 und im Wege des Metal-Injection-Molding-Verfahrens hergestellt ist, bildet durch diese Verklebung eine Wärmesenke für den Hochfrequenzchip 7 zur Ableitung der im Hochfrequenzchip 7 entstehenden Abwärme/Verlustleistung aus. Der Träger weist hierzu eine die Abgabe der Abwärme an die umgebende Luft fördernde Kühlrippenstruktur 23 in seinen Seitenbereichen 24 und an seinen Stirnseiten 25 auf. Bevorzugt ist die Kühlrippenstruktur 23 so ausgebildet, dass sie eine Außenumfangskontur 26 einer Trägeroberseite 27 nicht überragt, sondern gegenüber dieser zurückspringt. Die Trägeroberseite 27 weist bevorzugt eine der Leiterplatte 3 entsprechend dimensionierte Fläche auf, im Querschnitt ist der Träger 17 im Wesentlichen also deckungsgleich zur Leiterplatte 3. Dem gegenüber springt die Kühlrippenstruktur 23 des Trägers 17 zurück, so dass die Kühlrippenstruktur 23 die Außenumfangskontur 26 nicht überragt, sondern in vorteilhafter Weise eine gute Wärmeableitung innerhalb der durch die Dimension der Leiterplatte 3 vorgegebenen Abmessungen und Grundfläche bewirkt. Der Träger 17 weist vier Hornantennen 28 auf, die als offene Bereiche aus dem Trägermaterial ausgenommen sind. Dementsprechend findet sich an der Trägeroberseite 27 jeweils ein Hornmund 29, während, hier nicht sichtbar, an der Trägerunterseite ein entsprechender Hornhals ausgebildet ist. Die Hornantennen 28 sind im Bereich der Ecken eines gedachten Quadrats 30 angeordnet, wobei dieses Quadrat 30 relativ zu der auf der Leiterplatte 3 befindlichen Kreuzstruktur 12 um einen Winkel α von 45° verschoben ist. Hierdurch ergibt sich eine Lage der in dieser Darstellung nicht sichtbaren Hornhälse jeder Hornantenne 28 genau im Bereich eines Leiterplattenabstrahlfeldes 14, so dass jedes Leiterplattenabstrahlfeld 14 genau in eine Hornantenne 28 einstrahlt. In dem Hochfrequenz-Fixierteil 2, das unterhalb der Leiterplatte 3 angeordnet ist, finden in Fortsetzung der Hornantennen 28 und damit einen Teil der Hornantennen 28 selbst ausbildend, Vertiefungen 31, die ihrerseits genau unterhalb jeweils eines Leiterplattenabstrahlfeldes 14 liegen. Die Vertiefungen 31 sind aber endseitig geschlossen, also nur an einer der Leiterplatte 3 zugewandten Fixierteiloberseite 32 geöffnet, und bilden hiermit ein Shortback 33 aus, das eine Abstrahlung von Radarwellen in eine unerwünschte Richtung entgegen des Hornverlaufs verhindert und zur Richtung der Abstrahlung in die jeweiligen Hornantennen 28 hinein führt. Auf dem Träger 17, nämlich auf die Trägeroberseite 27 aufgelegt, ist ein Deckel 34, der aus einem elektrisch nicht leitenden Material 35 gefertigt ist. Der Deckel 34 weist Dielektrikumsstrukturen 36 auf, die der Kontur der Hornantennen 28 innerhalb des Trägers 17 im Wesentlichen formangepasst sind und die Hornantennen 28 im Bereich des Trägers 17 bei aufgelegtem Deckel zumindest bereichsweise ausfüllen. Ferner weist der Deckel in Verlängerung der Kontur der jeweiligen Hornantennen 28 und der Dielektrikumsstruktur 36 Hornlinsen 37 auf, die in etwa domförmig ausgebildet sind und eine Bündelung beziehungsweise Richtungsweisung der aus der jeweiligen Hornantenne 28 austretenden Radarwellen gestatten.

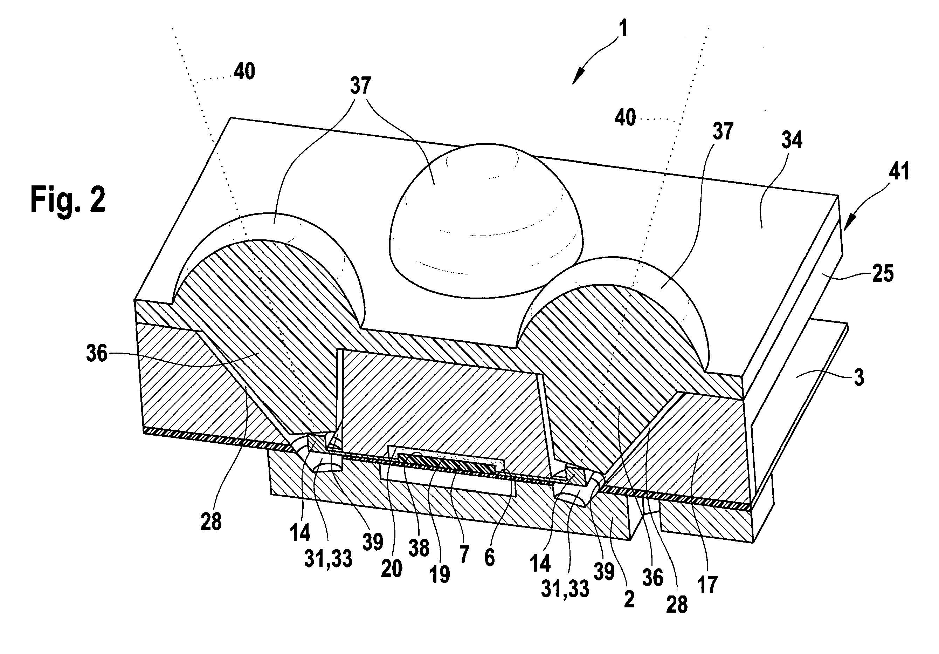

Figur 2 zeigt eine Schnittdarstellung durch die montierte Radarvorrichtung 1. Die Leiterplatte 3 ist hierbei zwischen dem Hochfrequenz-Fixierteil 2 und dem Träger 17 gehalten. Auf der Leiterplatte 3 ist auf dem Aufnahmebereich 6 der Hochfrequenzchip 7 verlötet, der wiederum mit seiner Chipoberseite 38 mittels eines Wärmeleitklebers 19 in der Trageausnehmung 20 des Trägers 17 verklebt ist. Der Träger 17 weist die Hornantennen 28 auf, die von den Dielektrikumsstrukturen 36 des Deckels 34 im Wesentlichen ausgefüllt sind und die sich deckeloberseitig in den Hornlinsen 37 fortsetzen. Das Hochfrequenz-Fixierteil 2 weist in Fortsetzung der Hornantennen 28 die Vertiefungen 31 auf, die jeweils als Shortback 33 wirken. Die Hornantennen 28 und die Vertiefungen 31 sind dergestalt in ihrer Geometrie ineinander übergehend angeordnet, dass die auf der Leiterplatte 3 angeordneten Leiterplattenabstrahlfelder 14 genau in einem unterseitig des Trägers 17 im Verlauf der Hornantenne 28 ausgebildeten Hornhals 39 liegen. Die Hornantennen 28 sind hierbei dergestalt ausgebildet, dass jede Hornantenne 28 in eine eigene, spezifische Richtung ausstrahlt. Diese spezifische Richtung kann jeweils nach den Anforderungen der jeweiligen Anwendung bestimmt werden; im vorliegenden Ausführungsbeispiel strahlt jede Hornantenne 28 in eine solche Richtung, dass eine Abstrahlachse 40 nicht senkrecht auf der Leiterplatte 3 steht, sondern in Richtung auf die jeweils zunächst liegende Stirnseite 25 des Trägers 17 beziehungsweise auf dessen zunächst liegende Längsseite 41 hin geneigt ist.

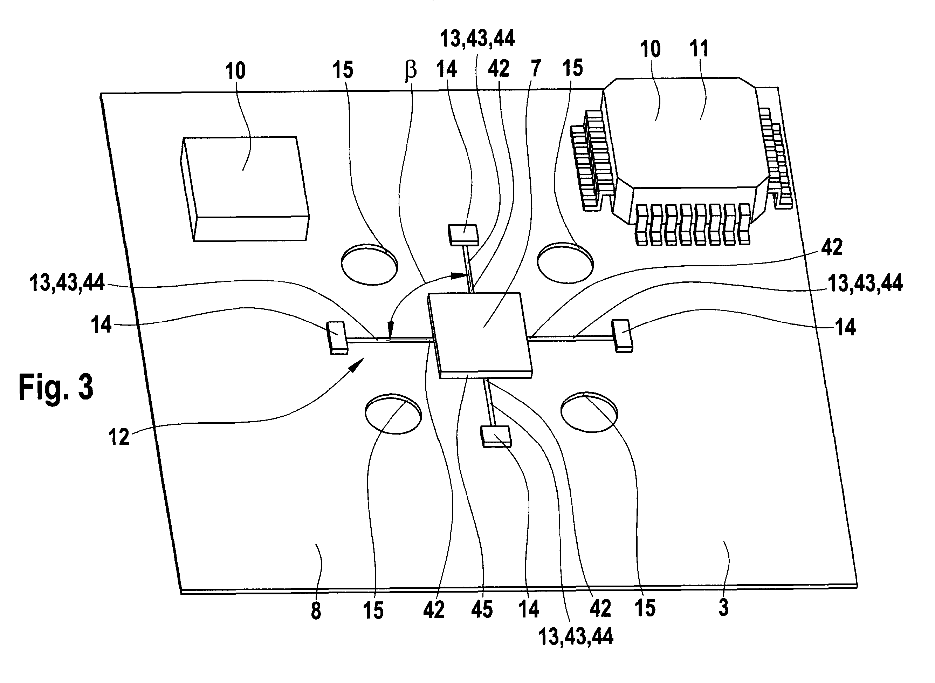

Figur 3 zeigt die Leiterplatte 3 der vorstehend beschriebenen, hier nicht dargestellten Radarvorrichtung 1. Die Leiterplatte 3 weist auf ihrer Leiterplattenoberseite 8 im Wesentlichen zentrisch den Hochfrequenzchip 7 auf, der vier Antennenausgänge 42 aufweist, denen jeweils eine Antennenleitung 13 zur Verbindung des Antennenausgangs 42 mit dem jeweils zugeordneten Leiterplattenabstrahlfeld 14 zugeordnet ist. Die Antennenleitungen 13 sind hierbei jeweils als auf der Leiterplatte 3 verlaufende Leiterbahn 43 ausgebildet, und zwar in einer Ausführung als Mikrostreifen 44. Neben der Ausbildung als Mikrostreifen 44 sind insbesondere auch Ausbildungen als (nicht dargestellte) Koplanarstreifen (Grounded-Coplanar-Strip) oder als symmetrische Leitungen möglich. Die Antennenleitungen 13, nämlich die Leiterbahnen 43 bilden auf der Leiterplatte 3 die Kreuzstruktur 12 aus, dergestalt, dass jede Antennenleitung 13 mit der ihr benachbarten, nächsten Antennenleitung 13 einen Antennenleitungswinkel β von 90° einschließt. Jeder Schmalseite 45 des Hochfrequenzchips 7 ist hierbei eine Antennenleitung 13 zugeordnet, dergestalt, dass auf jeder Schmalseite 45 eine Antennenleitung 13 der Kreuzstruktur 12 entspringt und zu einem Leiterplattenabstrahlfeld 14 führt. Auf diese Weise ist eine möglichst vorteilhafte Signalführung ohne unerwünschte gegenseitige Beeinflussung der einzelnen Antennenleitungen 13 und Leiterplattenabstrahlfelder 14 möglich. Zwischen den einzelnen Antennenleitungen 13 sind Montageausnehmungen 15 in die Leiterplatte 3 eingebracht, die von den hier nicht dargestellten, in Figur 1 beschriebenen Schraubbolzen 16 zur Montage des hier nicht dargestellten, in Figur 1 beschriebenen Hochfrequenz-Fixierteils 2 dienen, wobei die Leiterplatte 3 zwischen dem Hochfrequenz-Fixierteil 2 und dem hier ebenfalls nicht dargestellten Träger 17 fixiert wird. Die Leiterplatte 3 weist neben dem Hochfrequenzchip 7 und den zur Signalabstrahlung erforderlichen Antennenleitungen 13 und Leiterplattenabstrahlfeldern 14 gegebenenfalls weitere elektronische Bauelemente 10 auf, insbesondere Peripheriebausteine und/oder eine Kontaktiereinrichtung 11 zur Verbindung der elektronischen Schaltung auf der Leiterplatte 3 mit anderen elektronischen Schaltungen außerhalb der Radarvorrichtung 1 und zur Versorgung dieser mit Betriebsspannung.

## Patentansprüche

1. Radarvorrichtung, insbesondere zur Messung einer Geschwindigkeit über Grund, mit einer Hochfrequenzschaltung und einer Antenne, wobei die Hochfrequenzschaltung als Hochfrequenzchip (7) ausgebildet ist, der mehrere Antennenausgänge (42) aufweist, die über Antennenleitungen (13) an Hornantennen (28) angeschlossen sind, und wobei der Hochfrequenzchip (7) zwischen einer Leiterplatte (3) und einem Träger (17) angeordnet ist, **dadurch gekennzeichnet, dass** der Träger (17) Teile der Hornantennen (28) ausbildet.

2. Radarvorrichtung nach Anspruch 1, **dadurch gekennzeichnet, dass** die Antennenleitungen (13) jeweils als mindestens eine auf einer Leiterplatte (3) verlaufende Leiterbahn (43) ausgebildet sind.

3. Radarvorrichtung nach einem der vorhergehenden Ansprüche, **dadurch gekennzeichnet, dass** die Antennenleitungen (13) endseitig jeweils ein Leiterplattenabstrahlfeld (Patch) (14) aufweisen.

4. Radarvorrichtung nach einem der vorhergehenden Ansprüche, **dadurch gekennzeichnet, dass** die Leiterplatte (3) eine Polyimid-Folie ist.

5. Radarvorrichtung nach einem der vorhergehenden Ansprüche, **dadurch gekennzeichnet, dass** die Antennenleitung (13) ein Mikrostreifen (Micro-Strip), geerdeter, koplanarer Streifen (Grounded-Coplanar Strip) oder eine symmetrische Leitung ist.

6. Radarvorrichtung nach einem der vorhergehenden Ansprüche, **dadurch gekennzeichnet, dass** vier Antennenausgänge (42) vorgesehen sind, an die vier Antennenleitungen (13) angeschlossen sind, die derart verlaufen, dass sie eine Kreuzstruktur (12) bilden, bei der eine jeweilige Antennenleitung (13) zu einer jeweils benachbarten Antennenleitung (13) einen Winkel von 90° einschließt.

7. Radarvorrichtung nach einem der vorhergehenden Ansprüche, **dadurch gekennzeichnet, dass** vier Hornantennen (28) vorgesehen sind, die im Bereich der Ecken eines gedachten Quadrats angeordnet sind.

8. Radarvorrichtung nach einem der vorhergehenden Ansprüche, **dadurch gekennzeichnet, dass** der Träger (17) eine Wärmesenke für den Hochfrequenzchip (7) bildet.

9. Radarvorrichtung nach einem der vorhergehenden Ansprüche, **dadurch gekennzeichnet, dass** der Träger (17) eine Kühlrippenstruktur (23) aufweist.

10. Radarvorrichtung nach einem der vorhergehenden Ansprüche, **dadurch gekennzeichnet, dass** dem Träger (17) ein Deckel (34) zugeordnet ist, der Hornlinsen (37) für die Hornantennen (28) aufweist und/oder die Hornantennen (28) dielektrisch auffüllt.

11. Radarvorrichtung nach einem der vorhergehenden Ansprüche, **dadurch gekennzeichnet, dass** auf der dem Hochfrequenzchip (7) abgewandten Seite der Leiterplatte (3) ein Hochfrequenz-Fixierteil (2) angeordnet ist, das Bereiche der Hornantennen (28) ausbildet.

12. Radarvorrichtung nach einem der vorhergehenden Ansprüche, **dadurch gekennzeichnet, dass** der Hochfrequenzchip (7) in Flip-Chip-Montage angeschlossen ist.

## Claims

1. Radar apparatus, in particular for measurement of a speed over the ground, having a radio-frequency circuit and having an antenna, wherein the radio-frequency circuit is in the form of a radio-frequency chip (7) which has a plurality of antenna outputs (42) which are connected via antenna lines (13) to horn antennas (28), and wherein the radio-frequency chip (7) is arranged between a printed circuit (3) and a mount (17), **characterized in that** the mount (17) forms parts of the horn antennas (28).

2. Radar apparatus according to Claim 1, **characterized in that** the antenna lines (13) are each in the form of at least one conductor track (43) running on a printed circuit (3).

3. Radar apparatus according to one of the preceding claims, **characterized in that** the antenna lines (13) each have a printed circuit emission area (patch) (14) at the end.

4. Radar apparatus according to one of the preceding claims, **characterized in that** the printed circuit (3) is a polyimide film.

5. Radar apparatus according to one of the preceding claims, **characterized in that** the antenna line (13) is a microstrip, a grounded coplanar strip. or a balanced line.

6. Radar apparatus according to one of the preceding claims, **characterized in that** four antenna outputs (42) are provided, to which four antenna lines (13) are connected, which run such that they form a cruciform structure (12), in which each antenna line (13) includes an angle of 90° with a respectively adjacent antenna line (13).

7. Radar apparatus according to one of the preceding claims, **characterized in that** four horn antennas (28) are provided, and are arranged in the area of the corners of an imaginary square.

8. Radar apparatus according to one of the preceding claims, **characterized in that** the mount (17) forms a heat sink for the radio-frequency chip (7).

9. Radar apparatus according to one of the preceding claims, **characterized in that** the mount (17) has a cooling-rib structure (23).

10. Radar apparatus according to one of the preceding claims, **characterized in that** the mount (17) has an associated cover (34) which has horn lenses (37) for the horn antennas (28) and/or dielectrically fills the horn antennas (28).

11. Radar apparatus according to one of the preceding claims, **characterized in that** a radio-frequency fixing part (2), which forms areas of the horn antennas (28), is arranged on the side of the printed circuit (3) facing away from the radio-frequency chip (7).

12. Radar apparatus according to one of the preceding claims, **characterized in that** the radio-frequency chip (7) is connected using flip-chip assembly.

## Revendications

1. Dispositif radar, en particulier pour mesurer une vitesse au-dessus du sol, présentant
un circuit à haute fréquence et une antenne,
le circuit à haute fréquence étant configuré comme puce (7) à haute fréquence qui présente plusieurs sorties d'antenne (42) raccordées à des cornes d'antenne (28) par des conducteurs d'antenne (13),
la puce (7) à haute fréquence étant disposée entre une carte de circuit (3) et un support (17), **caractérisé en ce que**
le support (17) forme des parties des cornes d'antenne (28).

2. Dispositif radar selon la revendication 1, **caractérisé en ce que** les conducteurs d'antenne (13) sont tous configurés comme au moins une piste conductrice (43) qui s'étend sur une carte de circuit (3).

3. Dispositif radar selon l'une des revendications précédentes, **caractérisé en ce que** les conducteurs d'antenne (13) présentent à leur extrémité une surface de rayonnement ("patch") (14) de la carte de circuit.

4. Dispositif radar selon l'une des revendications précédentes, **caractérisé en ce que** la carte de circuit (3) est une feuille de polyimide.

5. Dispositif radar selon l'une des revendications précédentes, **caractérisé en ce que** le conducteur d'antenne (13) est un micro-ruban ("microstrip"), des rubans coplanaires raccordés à la terre ("grounded coplanar strip") ou un conducteur symétrique.

6. Dispositif radar selon l'une des revendications précédentes, **caractérisé en ce qu'**il présente quatre sorties d'antenne (42) auxquelles sont raccordés quatre conducteurs d'antenne (13) qui s'étendent de manière à former une structure (12) en croix, chaque conducteur d'antenne (13) formant avec chaque conducteur d'antenne (13) voisin un angle de 90°.

7. Dispositif radar selon l'une des revendications précédentes, **caractérisé en ce qu'**il présente quatre cornes d'antenne (28) disposées dans la zone des coins d'un carré imaginaire.

8. Dispositif radar selon l'une des revendications précédentes, **caractérisé en ce que** le support (17) forme un drain thermique pour la puce (7) à haute fréquence.

9. Dispositif radar selon l'une des revendications précédentes, **caractérisé en ce que** le support (17) présente une structure (23) à ailettes de refroidissement.

10. Dispositif radar selon l'une des revendications précédentes, **caractérisé en ce qu'**un couvercle (34) qui présente des lentilles de corne (37) pour les cornes d'antenne (28) et/ou qui remplit de diélectrique les cornes d'antenne (28) est associé au support (17).

11. Dispositif radar selon l'une des revendications précédentes, **caractérisé en ce que** sur le côté de la carte de circuit (3) non tourné vers la puce (7) à haute fréquence est disposée une pièce de fixation (2) à haute fréquence qui forme des zones des cornes d'antenne (28).

12. Dispositif radar selon l'une des revendications précédentes, **caractérisé en ce que** la puce (7) à haute fréquence est raccordée par un montage dit "flip chip".
